# FASCICULE DE BREVET EUROPEEN

(11) **EP 4 259 463 B1**
(45) Date de publication et mention de la délivrance du brevet: **21.05.2025**
(21) Numéro de dépôt: 21819922.2
(22) Date de dépôt: 10.11.2021
(51) Int. Cl.: B60J 5/04, E05B 79/06

(54) **SUPPORT DE COMMANDE D'OUVERTURE EXTERIEURE DE VEHICULE**
EXTERNE ÖFFNUNGSSTEUERUNGSKLAMMER EINES FAHRZEUGS
EXTERNAL OPENING CONTROL BRACKET OF A VEHICLE

(30) Priorité: 14.12.2020 FR 2013131
(43) Date de publication de la demande: 18.10.2023
(73) Titulaire: Stellantis Auto SAS, 78300 Poissy (FR)
(72) Inventeur: KERMORVANT, Mael, 78650 BEYNES (FR); LAMBIN, Herve, 91520 EGLY (FR)
(74) Mandataire: BCIP
(86) Numéro de dépôt international: PCT/FR2021/051993
(87) Numéro de publication internationale: WO 2022/129720

(56) Documents cités:
- EP-A1- 0 818 339
- WO-A1-2020/254746
- WO-A1-2020/254748
- DE-A1- 102017 001 512
- JP-A- 2010 228 659

## Description

### DOMAINE TECHNIQUE DE L'INVENTION

La présente invention revendique la priorité de la demande française 2013131 déposée le 14 Décembre 2020.

La présente invention concerne une porte latérale de véhicule automobile. Elle concerne un support de commande d'ouverture extérieure de porte. Elle concerne en particulier des structures de renforcement de la porte. Elle concerne aussi un véhicule automobile comportant une porte selon l'invention.

### ARRIÈRE-PLAN TECHNOLOGIQUE DE L'INVENTION

L'améliorations de la protection vis-à-vis des chocs s'exerçant sur les parties latérales d'un véhicule conduisent à des modifications des structures de portes en particulier dans la partie basse de la porte en-dessous de la partie fenêtre ou caisson de porte. Ces modifications concernent en particulier des éléments de renforcements internes au caisson de la porte.

Il convient de plus devant l'augmentation de la sévérité des nouveaux protocoles de chocs latéraux de s'assurer de la bonne tenue du support de la commande extérieure de porte, indispensable du fait que la commande extérieure de porte doit pouvoir être manœuvrée après le choc.

Pour cela, les zones de fixations ou de liaison du support de la commande d'ouverture extérieure de porte à la structure du caisson de porte ont besoin d'être renforcée.

Le document EP3127731 décrit un support de poignée fabriqué d'un seul tenant avec un renfort situé en partie supérieure du caisson de porte et fixé au renfort de frise et à la paroi arrière du caisson de porte. Ladite porte latérale selon le document EP3127731 comporte aussi des renforts longitudinaux s'étendant de l'avant vers l'arrière du caisson de porte. Cependant dans cette configuration le support de poignée n'est pas du tout maintenu dans sa partie basse et sur une large portion de sa partie avant et de fait la tenue de la commande d'ouverture extérieure aux chocs latéraux n'es pas assurée de façon satisfaisante par ce renfort vis-à-vis de chocs latéraux de plus en plus sévères.

Le document DE10 2017 001512 A1 décrit un support de poignée fixé au renfort de frise, sans être maintenu dans sa partie basse.

L'invention a pour but de proposer une porte avant de véhicule automobile dont la conception permet de satisfaire aux normes de protection vis-à-vis des chocs latéraux en maintenant de façon satisfaisante la commande d'ouverture extérieure de porte lors de ces chocs latéraux.

L'invention a donc pour but de résoudre le problème ci-dessus à savoir de résoudre le problème du maintien de la commande d'ouverture extérieure de porte lors de chocs latéraux de plus en plus sévères.

### DESCRIPTION GENERALE

A cet effet l'invention propose une porte latérale de véhicule automobile selon la revendication 1.

Ainsi le support de commande est maintenu sur deux renforts disposés de part et d'autre du support de commande d'ouverture extérieure, les deux renforts ayant des bonnes propriétés de tenue mécanique aux chocs latéraux.

Dans un mode de réalisation de l'invention, le renfort intermédiaire est sensiblement parallèle au renfort de frise.

Dans un mode de réalisation de l'invention, le renfort de frise et le renfort intermédiaire comportent des parois planes en vis-à-vis des zones de fixation du support de commande d'ouverture extérieure, les zones de fixation du support comportant des portions planes parallèles auxdites parois planes des renforts, les portions planes du support étant destinées à être assemblées aux parois planes des renforts en vis-à-vis.

Dans un mode de réalisation de l'invention, l'assemblage du support au renfort de frise et au renfort intermédiaire est réalisé par un mastic de calage et/ou par le moyen d'un adhésif, et/ou par vissage, et/ou par combinaison d'un mastic calage et/ou d'un moyen de collage et d'un moyen de vissage.

Dans un mode particulier de réalisation de l'invention, l'assemblage du support au renfort de frise est réalisé par un cordon de mastic de calage et l'assemblage du support au renfort intermédiaire est réalisé par un cordon de mastic de calage.

Ainsi un cordon de mastic de calage haut est disposé entre les parois planes du renfort de frise et les portions planes du support en vis-à-vis, et un cordon de mastic de calage bas est disposé entre les parois planes du renfort intermédiaire et les portions planes du support en vis-à-vis.

Dans un autre mode de réalisation; les cordons de mastic de calage haut et bas s'étendent entre lesdites parois planes et portions planes sur sensiblement, dans la direction longitudinale du véhicule, la totalité de la longueur des parois et portions en vis-à-vis.

Dans un mode de réalisation de l'invention, la porte latérale comporte un panneau extérieur fixé par sertissage au caisson de porte, ledit panneau extérieure comporte côté intérieur des moyens de fixation, le support de commande d'ouverture extérieure comporte des interfaces de fixations destinées à coopérer avec les moyens de fixations fixés au panneau extérieur.

Ainsi le support est fixé par son côté intérieur véhicule aux renfort de frise et au renfort intermédiaire, et est fixé au panneau extérieur de porte.

Dans un mode de réalisation de l'invention, la poignée de la commande d'ouverture extérieure est de type flush, c'est-à-dire que la une poignée est affleurante en position de non utilisation par rapport au panneau extérieur de porte.

L'utilisation d'un support de poignée disposé intérieurement par rapport au panneau extérieur de porte permet de fixer la platine et donc la poignée de façon efficace et sure.

Dans un mode particulier de l'invention, la platine de commande d'ouverture extérieure comporte des agrafes de pré-maintien, le support comportant des interfaces destinées à coopérer avec lesdites agrafes de façon à maintenir la commande d'ouverture extérieure avant sa fixation au support.

La platine est fixée ensuite, c'est-à-dire une fois pré-maintenue au support, au support par exemple par des vis.

L'invention concerne aussi un procédé de réalisation d'une porte latérale selon l'invention comportant les étapes successives suivantes :
- E1 : Assemblage au ferrage de la porte comportant l'étape d'assemblage au ferrage du caisson de porte et du renfort de frise et du renfort intermédiaire,
- E2 : Dépose de cordons de mastic de calage respectivement sur les parois planes du renfort de frise et du renfort intermédiaire, destinés à être en vis-à-vis des portions planes du support, par exemple par un robot
- E3 : Fixation du support de commande d'ouverture extérieure au panneau extérieur de porte,
- E4 : Assemblage du panneau extérieur de porte au caisson de porte par sertissage, les portions planes du support venant au contact contre les cordons de mastic de calage,
- E5 : Passage de la porte dans un bain de cataphorèse de sorte à protéger la porte contre la corrosion, et/ou passage en étuve de cuisson de la porte après le passage en cataphorèse,
- E6 : Pré-maintien de la platine de commande d'ouverture extérieure sur le support de commande d'ouverture extérieure par l'engagement des agrafes de pré-maintien dans les interfaces du support de commande d'ouverture extérieure, suivi de la fixation de la platine de la commande d'ouverture extérieure au support de commande d'ouverture extérieure par vissage.

L'étape de passage en cataphorèse et/ou de passage en étuve de cuisson du fait de l'élévation de température qui en résulte provoque la réticulation des cordons de mastic de calage disposés entre le support de commande d'ouverture extérieure et le renfort de frise et le renfort intermédiaire. Cette réticulation du mastic de calage permet une adhésion solide du support de commande d'ouverture extérieure au renfort de frise et au renfort intermédiaire.

L'invention concerne aussi un véhicule comportant une porte selon l'invention.

L'invention concerne aussi un véhicule comportant une porte réalisée selon le procédé de l'invention.

### DESCRIPTION DETAILLEE

L'invention sera mieux comprise à la lecture de la description qui va suivre, donnée uniquement à titre d'exemple et faite en se référant aux dessins annexés, sur lesquels :
[Fig.1] représente une vue extérieure d'une porte latérale dans laquelle la paroi extérieure de la porte n'est pas représentée.
[Fig.2] représente schématiquement une vue en coupe selon un plan vertical et transversal par rapport au véhicule.

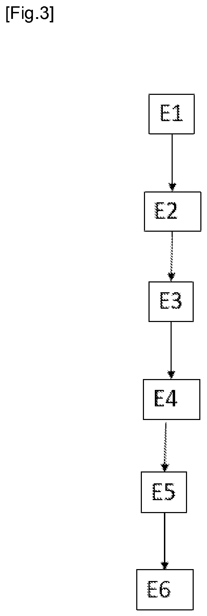

[Fig.3] présente schématiquement les étapes de réalisation de la porte selon l'invention.

Les dessins sont des représentations schématiques servant à faciliter la compréhension de l'invention. Les composants ne sont pas forcément représentés à l'échelle.

Dans la description qui suit, le terme « comprendre » est synonyme de « inclure » et n'est pas limitatif en ce qu'il autorise la présence d'autres éléments ou composants ou parties d'un capot. Il est entendu que le terme « comprendre » inclut les termes « consister en ». Sur les différentes figures, les mêmes références désignent des éléments identiques ou similaires.

La direction X est l'axe longitudinal du véhicule en ordre de marche. La direction Y est la direction transverse du véhicule en ordre de marche. La direction Z est la verticale du véhicule orientée vers le haut.

Dans la description qui suit le terme avant se rapportant à l'avant du véhicule et l'arrière se rapporte à l'arrière du véhicule en ordre de marche.

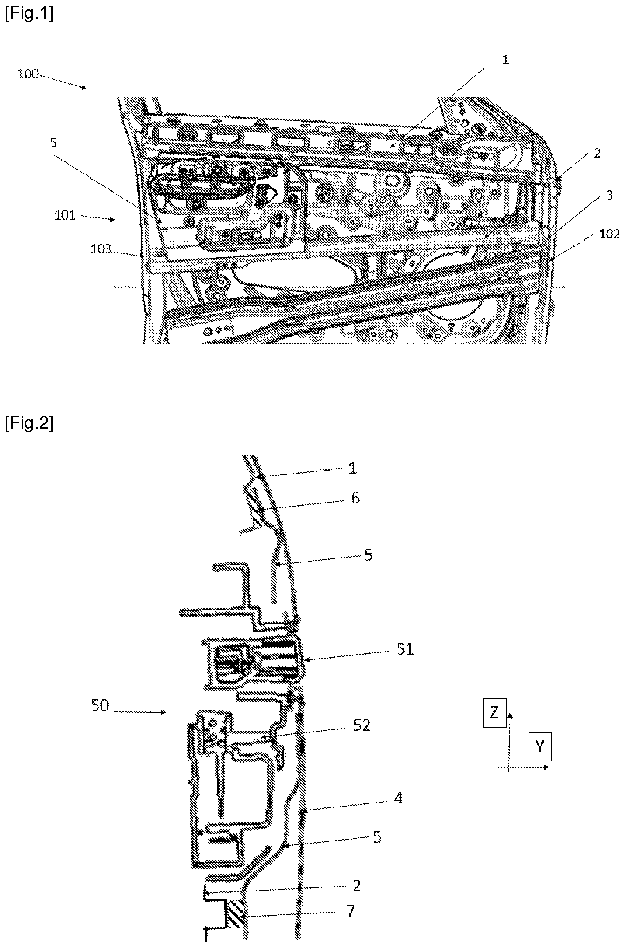

La figure 1 représente schématiquement une vue depuis l'extérieure du véhicule d'une porte latéral 100 dans une position installée sur le véhicule, avec dans cette vue le panneau extérieur de la porte 100 qui n'est pas représenté.

La porte latérale 100 de véhicule automobile comporte un caisson 101 sous une partie fenêtre, ledit caisson 101 comprenant :
- une paroi avant 102 et une paroi arrière 103,
- un renfort de frise 1 reliant en partie supérieure du caisson 101 la paroi avant 102 avec la paroi arrière 103, le long de la partie fenêtre.

La porte 100 comprend en outre un renfort intermédiaire 2 disposé longitudinalement à l'intérieur du caisson 101 de la porte, et s'étendant entre la paroi avant 102 et la paroi arrière 103, distant du renfort de frise 1.

Le renfort intermédiaire 2 est disposé dans le caisson de porte 101 en situation véhicule dans une position verticale inférieure à celle du renfort de frise 1.

Le caisson de porte 101 comprend aussi une commande d'ouverture extérieure 50 et un support 5 de la commande d'ouverture extérieure 50. Le support 5 est disposé à l'intérieur du caisson de porte 101.

Telle que représentée en figure 1, le support 5 de commande d'ouverture extérieure est disposé entre le renfort de frise 1 et le renfort intermédiaire 2 et comporte des zones de fixation au renfort de frise 1 et comporte des zones de fixation au renfort intermédiaire 2, de sorte à être fixé d'un côté au renfort de frise 1 et de l'autre au renfort intermédiaire 2.

Le caisson de porte 101 comporte un panneau extérieur 4.

Le support 5 est disposé entre le renfort de frise 1 et le panneau extérieur 4 de la porte.

Le support 5 est disposé entre le renfort intermédiaire 2 et le panneau extérieur de la porte.

Dans la représentation de la figure 1, le caisson 101 de porte 100 comporte un renfort bas 3 disposé au sein du caisson longitudinalement entre la paroi avant 102 et la paroi arrière 103 du caisson 101, en partie basse du caisson 101 et reliant la zone de fixation des charnières de la porte au niveau de la paroi avant avec le coin bas à l'arrière du caisson 101 de porte, dans cette autre variante le renfort intermédiaire 2 étant disposé verticalement, en situation véhicule, entre le renfort de frise 1 et le renfort bas 3.

Telle que représenté schématique en figure 2, la commande d'ouverture extérieure 50 comporte :
- une poignée 51,
   - une platine 52 fixée au support 5 de commande d'ouverture extérieure, du côté intérieur véhicule au support 5 de commande d'ouverture extérieure. La poignée 51 est fixée à la platine 52. Le support 5 et le panneau extérieur 4 comportant chacun une ouverture en vis-à-vis, la poignée traversant les deux ouvertures.

Dans une variante de l'invention, la poignée 51 de la commande d'ouverture extérieure 50 est de type « flush ». C'est-à-dire que la paroi extérieure, en situation véhicule, de la poignée 51 en position de non utilisation ne dépasse pas du panneau extérieur 4 et reste donc affleurante par rapport à ce panneau extérieur 4.

Dans une variante de l'invention, le renfort de frise 1 et le renfort intermédiaire 2 comportent chacun des parois planes, en vis-à-vis des zones de fixation du support 5 de commande d'ouverture extérieure auxdits renforts (1, 2). Les zones de fixation du support 5 de commande d'ouverture extérieure comportant des portions planes parallèles et e vis-à-vis des dites parois planes des renforts, lesdites portions planes étant destinées à être respectivement fixées aux parois planes du renfort de frise 1 et du renfort intermédiaire 2.

Dans une variante de l'invention, la fixation du support 5 au renfort de frise 1 et au renfort intermédiaire 2 est réalisé par un mastic de calage et/ou par le moyen d'un adhésif, et/ou par vissage, et/ou par combinaison d'un mastic calage et/ou d'un moyen de collage et d'un moyen de vissage.

Dans un mode de réalisation de l'invention, la fixation du support 5 au renfort de frise 1 est réalisé par un cordon de mastic de calage 6 et la fixation du support 5 au renfort intermédiaire 2 est réalisé par un cordon de mastic de calage 7.

Dans une variante de l'invention les cordons de mastic de calage 6, 7, occupent longitudinalement la quasi-totalité des surfaces en vis-à-vis des parois planes et des portions planes.

Le mastic de calage est réalisé dans un matériau réticulant suite à une élévation de température de sorte à réaliser une fixation par adhésion des parois planes et portions planes en contact avec le cordon de mastic de calage.

Dans une variante les cordons de mastic de calage 6, 7, sont déposés en automatique sur le renfort de frise 1 et sur le renfort intermédiaire 2 par le moyen d'une buse agencée sur un robot.

Dans une autre variante les cordons de mastic de calage 6, 7, sont déposés sur les portions planes du support de commande d'ouverture extérieure.

Dans une variante de l'invention, le panneau extérieur 4 comporte côté intérieur véhicule des moyens de fixation, le support 5 de commande d'ouverture extérieure comportant des interfaces de fixations destinées à coopérer avec les moyens de fixations fixés au panneau extérieur.

Le panneau extérieur 4 est fixé aux éléments composant le caisson 101 de porte par sertissage.

Dans une variante de l'invention les moyens de fixations du support 5 au panneau extérieur 4 sont fixés par le moyen d'un mastic de calage au panneau extérieur 4, et/ou par adhésif. Ainsi cette fixation au panneau extérieur 4 au support 5, n'est pas visible depuis l'extérieur du véhicule.

Dans une variante de l'invention, la platine 52 de la commande d'ouverture extérieure comporte des agrafes de pré-maintien. Ces agrafes de pré-maintien maintiennent en position la platine 52 contre le support 5, en attendant que cette platine 52 soit fixée au support 5. Le support 5 comporte des interfaces destinées à coopérer avec lesdites agrafes de pré-maintien de sorte à pré-maintenir la platine commande d'ouverture extérieure. La fixation de la platine 52 au support est réalisée par des moyens de vissage.

Dans une variante de l'invention les agrafes de pré-maintien sont en matériaux plastiques ou élastomères et comportent une partie déformable destinée à s'engager dans l'interface en vis-à-vis dans le support de commande d'ouverture extérieure.

L'invention concerne aussi un procédé de réalisation d'une porte latérale selon l'invention comportant les étapes successives suivantes :
- E1 : Assemblage lors des opérations de ferrage du caisson 101 de porte et des renforts de frise 1 et intermédiaire 2,
- E2 : Dépose de cordons de mastic de calage 6 et 7, respectivement sur les parois planes du renfort de frise 1 et du renfort intermédiaire 2, destinés à être en vis-à-vis des portions planes du support 5,
- E3 : Fixation du support 5 au panneau extérieur 4 de porte,
- E4 : Assemblage du panneau extérieur 4 de porte au caisson 101 de porte par sertissage, les portions planes du support venant au contact contre les cordons de mastic de calage 6, 7, disposés respectivement sur les parois planes du renfort de frise 1 et du renfort intermédiaire 2 en vis-à-vis.
- E5 : Passage de la porte dans un bain de cataphorèse et/ou dans une étuve de cuisson.
- E6 : Pré-maintien de la platine 52 de commande d'ouverture extérieure sur le support 5 par l'engagement des agrafes de pré-maintien dans les interfaces du support 5, suivi de la fixation de la platine 52 au support 5 par vissage

Lors de l'étape de ferrage E1 du caisson de porte 101, les éléments formant le caisson sont soudés entre eux, notamment le renfort de frise 1 et le renfort intermédiaire 2 sont soudés aux parois avant 102 et arrière 103 du caisson 101 de porte.

Lors de l'étape E2 les cordons de mastic de calage 6, 7 sont déposés sur les parois planes du renfort de frise 1 et du renfort intermédiaire 2, par exemple par un robot.

Dans une variante de l'invention le renfort de frise 1 est un profilé en tôle comportant une paroi sensiblement verticale et plane située sensiblement dans un plan longitudinal et vertical, cette paroi formant la partie la plus basse du renfort de frise 1, lorsque la porte est installée sur le véhicule. Le cordon de mastic de calage e6 st disposé sur cette paroi plane la plus basse et plane du renfort de frise. Le renfort intermédiaire 2 est un profilé en tôle comportant une paroi sensiblement verticale et plane située sensiblement dans un plan longitudinal et vertical, cette paroi formant la partie la plus haute du renfort de frise 2, lorsque la porte est installée sur le véhicule. Le cordon de mastic de calage 7 est disposé sur cette paroi plane la plus haute et plane du renfort intermédiaire 2.

Dans une autre variante de l'invention le renfort intermédiaire 2 a une section dans un plan vertical et transversal YZ en forme de « oméga ».

La fixation du support 5 à l'étape E4 au panneau extérieur 4 est réalisé par un mastic de calage.

Lors de l'étape E4, le panneau extérieur 104 est sertit au caisson de porte, et dans le même temps les portions planes du support 5 viennent au contact contre les cordons de mastic de calage 6 et 7.

L'étape E5 de passage dans le bain de cataphorèse a pour but la protéger contre la corrosion les éléments formant la porte, en particulier les éléments métalliques en acier du caisson 101 de porte. Le passage en cataphorèse provoque une élévation de la température.

Ce passage en cataphorèse est suivi dans une variante de l'invention d'un passage dans une étuve de cuisson permettant de faire sécher le traitement de cataphorèse

L'étape E5 du fait de l'élévation de température provoque la réticulation et donc le durcissement des cordons de mastic de calage 6, 7.

Il y a ainsi adhérisation des portions planes du support 5 contre les parois planes du renfort de frise 1 et du renfort intermédiaire 2, par les cordons de mastic 6, 7 qui ont réticulé et donc durci.

Lors de l'étapes E6, la platine 52 est pré-maintenue par des agrafes sur le support 5 puis ensuite la platine 52 est fixé au support 5 par des vis.

L'invention concerne aussi un véhicule comportant une porte 100 selon l'invention.

L'invention concerne aussi une porte 100 fabriquée selon le procédé selon l'invention.

## Revendications

1. Porte latérale (100) de véhicule automobile comportant un caisson (101) sous une partie fenêtre, le caisson (101) comprenant :
- une paroi avant (102) et une paroi arrière (103),
- un renfort de frise (1) reliant en partie haute du caisson (101) la paroi avant (102) avec la paroi arrière (103), le long de la partie fenêtre,
- un renfort intermédiaire (2) disposé longitudinalement à l'intérieur du caisson (101) de porte, et s'étendant entre la paroi avant (102) et la paroi arrière (103), distant du renfort de frise (1),
- un support (5) de commande d'ouverture extérieure de porte disposé à l'intérieur du caisson de porte, entre le renfort de frise (1) et le renfort intermédiaire (2), **caractérisé en ce que** le support (5) de commande d'ouverture extérieure de porte comporte des zones de fixation au renfort de frise et au renfort intermédiaire, de sorte à être fixé d'un côté au renfort de frise et de l'autre au renfort intermédiaire,
et **en ce que** la porte latérale (100) comporte une commande (50) d'ouverture extérieure comportant :
- une poignée (51),
- une platine (52) fixée au support (5) de commande d'ouverture extérieure, du côté intérieur véhicule par rapport au support (5) de commande d'ouverture extérieure,
le caisson (101) comportant un panneau extérieur (4),
le support (5) et le panneau extérieur (4) comportant chacun une ouverture en vis-à-vis, la poignée traversant les deux ouvertures.

2. Porte latérale (100) selon la revendication précédente dans laquelle la poignée (51) de la commande (50) d'ouverture extérieure est de type « flush ».

3. Porte latérale (100) selon l'une des revendications précédentes, dans laquelle le renfort de frise (1) et le renfort intermédiaire (2) comportent chacun des parois planes en vis-à-vis des zones de fixation du support (5) de commande d'ouverture extérieure, les zones de fixation du support(5) de commande d'ouverture extérieure comportant des portions planes parallèles auxdites parois planes des renforts, lesdites portions planes étant destinées à être fixées aux parois planes des renforts en vis-à-vis.

4. Porte latérale selon la revendication 3, dans laquelle la fixation du support (5) de commande d'ouverture extérieure au renfort de frise (1) et au renfort intermédiaire (2) est réalisé par un mastic de calage et/ou par le moyen d'un adhésif, et/ou par vissage, et/ou par combinaison d'un mastic calage et/ou d'un moyen de collage et d'un moyen de vissage.

5. Porte latérale selon la revendication 3, dans laquelle la fixation du support (5) au renfort de frise (1) est réalisé par un cordon de mastic de calage (6) et la fixation du support (5) au renfort intermédiaire (2) est réalisé par un cordon de mastic de calage (7).

6. Porte latérale selon l'une des revendications précédentes, dans laquelle, la porte comporte un panneau extérieur (4) fixé par sertissage au caisson de porte (101), ledit panneau extérieur (4) comportant côté intérieur véhicule des moyens de fixation, le support (5) de commande d'ouverture extérieure comportant des interfaces de fixations destinées à coopérer avec les moyens de fixations fixés au panneau extérieur (4).

7. Porte latérale selon l'une des revendications précédentes, dans laquelle la platine (52) de commande d'ouverture extérieure comporte des agrafes de pré-maintien, le support (5) comportant des interfaces destinées à coopérer avec lesdites agrafes de sorte à maintenir la platine (52) de commande d'ouverture extérieure avant sa fixation au support (5), de préférence la platine (52) est fixée au support (5) par des vis.

8. Procédé de réalisation d'une porte latérale (100) selon la revendication 7 et l'une des revendications 3 à 5 comportant les étapes successives suivantes :
- E1 : Assemblage lors des opérations de ferrage du caisson (101) de porte et des renforts de frise (1) et intermédiaire (2),
- E2 : Dépose de cordons de mastic de calage (6, 7) respectivement sur les parois planes du renfort de frise (1) et du renfort intermédiaire (2), destinés à être en vis-à-vis des portions planes du support (5),
- E3 : Fixation du support (5) au panneau extérieure de porte (4),
- E4 : Assemblage du panneau extérieur (4) de porte au caisson de porte (101) par sertissage, les portions planes du support venant au contact contre les cordons de mastic de calage (6, 7),
- E5 : Passage de la porte dans un bain de cataphorèse de sorte à protéger la porte contre la corrosion, de préférence suivi du passage dans une étuve de cuisson,
- E6 : Pré-maintien de la platine (52) sur le support (5) par l'engagement des agrafes de pré-maintien dans les interfaces du support (5) suivi de la fixation de la platine (52) au support (5) de préférence par vissage.

9. Véhicule comportant une porte latérale (100) selon l'une des revendications 1 à 7.

## Patentansprüche

1. Seitentür (100) eines Kraftfahrzeugs, die einen Kasten (101) unter einem Fensterteil aufweist, wobei der Kasten (101) Folgendes aufweist:
- eine Vorderwand (102) und eine Rückwand (103),
- eine Friesenstärke (1), die im oberen Teil des Kastens (101) die Vorderwand (102) mit der Rückwand (103) entlang des Fensterteils verbindet,
- eine in Längsrichtung innerhalb des Türkastens (101) angeordnete Zwischenverstärkung (2), die sich zwischen der Vorderwand (102) und der Rückwand (103) erstreckt und von der Friesenstärke (1) beabstandet ist,
- einen Türöffnungssteuerrahmen (5), der innerhalb des Türkastens zwischen der Friesenstärke (1) und der Zwischenverstärkung (2) angeordnet ist, **dadurch gekennzeichnet, dass** der Türöffnungssteuerrahmen (5) Bereiche zur Befestigung an der Friesenstärke und der Zwischenverstärkung aufweist, sodass er einerseits an der Friesenstärke und andererseits an der Zwischenverstärkung befestigt ist,
und dass die Seitentür (100) eine Betätigungseinrichtung (50) zum Öffnen der Außenseite aufweist, die folgendes umfasst:
- einem Griff (51),
- eine am äußeren Öffnungssteuerrahmen (5) befestigte Platine (52), die bezüglich des äußeren Öffnungssteuerrahmens (5) fahrzeugseitig befestigt ist, wobei der Kasten (101) eine Außenwand (4) aufweist, wobei der Träger (5) und die Außenwand (4) jeweils eine gegenüberliegende Öffnung aufweisen, wobei der Griff durch beide Öffnungen verläuft.

2. Seitentür (100) nach dem vorhergehenden Anspruch, bei der der Griff (51) der äußeren Öffnungssteuerung (50) vom Flush-Typ ist.

3. Seitentür (100) nach einem der vorhergehenden Ansprüche, bei der die Friesenstütze (1) und die Zwischenverstärkung (2) jeweils ebene Wände aufweisen, die den Befestigungsbereichen des äußeren Öffnungssteuerungsträgers (5) gegenüberliegen, wobei die Befestigungsbereiche des äußeren Öffnungssteuerungsträgers (5) ebene Abschnitte aufweisen, die parallel zu den ebenen Wänden der Verstärkungen verlaufen, wobei die ebenen Abschnitte dazu bestimmt sind, an den ebenen Wänden der gegenüberliegenden Verstärkungen befestigt zu werden.

4. Seitentür nach Anspruch 3, bei der die Befestigung des äußeren Öffnungssteuerungsträgers (5) an der Friesenstärke (1) und der Zwischenverstärkung (2) durch ein Keilmittel und/oder durch ein Klebemittel und/oder durch Verschrauben und/oder durch eine Kombination aus einem Keilmittel und/oder einem Klebemittel und einem Schraubmittel erfolgt.

5. Seitentür nach Anspruch 3, bei der die Befestigung des Trägers (5) an der Friesenstärke (1) durch eine Keilkeilschnur (6) und die Befestigung des Trägers (5) an der Zwischenstärke (2) durch eine Keilkeilschnur (7) erfolgt.

6. Seitentür nach einem der vorhergehenden Ansprüche, bei der die Tür eine äußere Platte (4) aufweist, die durch Crimpen an dem Türkasten (101) befestigt ist, wobei die äußere Platte (4) an der Innenseite des Fahrzeugs Befestigungsmittel aufweist, wobei der äußere Öffnungssteuerungsträger (5) Befestigungsschnittstellen zum Zusammenwirken mit den Befestigungsmitteln aufweist, die an der äußeren Platte (4) befestigt sind.

7. Seitentür nach einem der vorhergehenden Ansprüche, bei der die äußere Öffnungssteuerplatine (52) Vorhalteklammern aufweist, wobei der Träger (5) Schnittstellen zum Zusammenwirken mit den Klammern aufweist, um die äußere Öffnungssteuerplatine (52) vor ihrer Befestigung an dem Träger (5) zu halten, wobei vorzugsweise die Platine (52) an dem Träger (5) durch Schrauben befestigt ist.

8. Verfahren zum Herstellen einer Seitentür (100) nach Anspruch 7 und einem der Ansprüche 3 bis 5, das die folgenden aufeinander folgenden Schritte umfasst:
- E1: Zusammenbau des Türkastens (101) und der Friesenstütze (1) und der Zwischenstütze (2) während des Beschlagvorgangs,
- E2: Anbringen von Keilkordeln (6, 7) jeweils an den ebenen Wänden der Friesenstärke (1) und der Zwischenverstärkung (2), die den ebenen Abschnitten des Trägers (5) gegenüberliegen,
- E3: Befestigung der Halterung (5) an der äußeren Türverkleidung (4),
- E4: Zusammenbau der Türaußenverkleidung (4) mit dem Türkasten (101) durch Crimpen, wobei die ebenen Teile des Trägers an den Keilkittschnüren (6, 7) anliegen,
- E5: Durchgang der Tür durch ein Kataphoresebad, um die Tür vor Korrosion zu schützen, vorzugsweise gefolgt von einem Durchgang durch einen Ofen,
- E6: Vorspannen der Platine (52) auf dem Träger (5) durch Eingreifen der Vorhalteklammern in die Schnittstellen des Trägers (5) gefolgt von der Befestigung der Platine (52) an dem Träger (5), vorzugsweise durch Verschrauben.

9. Fahrzeug mit einer Seitentür (100) nach einem der Ansprüche 1 bis 7.

## Claims

1. Motor vehicle side door (100) comprising a box (101) under a window part, the box (101) comprising:
- a front wall (102) and a rear wall (103),
a frieze reinforcement (1) connecting the front wall (102) in the upper part of the box (101) with the rear wall (103), along the window part,
- an intermediate reinforcement (2) arranged longitudinally inside the gate box (101), and extending between the front wall (102) and the rear wall (103), distant from the frieze reinforcement (1),
- a support (5) for the order of the exterior opening of the gate arranged inside the door box, between the frieze reinforcement (1) and the intermediate reinforcement (2), wherein the support (5) for the order of the exterior opening of the gate comprises zones for fixing to the frieze reinforcement and to the intermediate reinforcement, so as to be fixed on one side to the frieze reinforcement and on the other to the intermediate reinforcement,
and in that the side door (100) comprises an outer opening order (50) comprising:
- a handle (51),
- a plate (52) fixed to the outer opening order support (5), from the vehicle inner side by report to the outer opening order support (5), the box (101) comprising an outer panel (4), the support (5) and the outer panel (4) each comprising an opening facing each other, the handle passing through the two openings.

2. Side door (100) according to the previous claim, in which the handle (51) of the outer opening order (50) is of the "flush" type.

3. Side door (100) according to one of the previous claims, in which the frieze reinforcement (1) and the intermediate reinforcement (2) each comprise flat walls facing the fixing zones of the order support (5) for the outer opening, the fixing zones of the order support (5) for the outer opening comprising flat portions parallel to said flat walls of the reinforcements, said flat portions being intended to be fixed to the flat walls of the facing reinforcements.

4. Side door according to Claim 3, in which the attachment of the outer opening order support (5) to the frieze reinforcement (1) and to the intermediate reinforcement (2) is realised by a calage mastic and/or by means of an adhesive, and/or by screwing, and/or by combination of a wedging mastic and/or of a glueing means and of a screwing means.

5. Side door according to claim 3, in which the attachment of the support (5) to the frieze reinforcement (1) is realised by a calage mastic bead (6) and the attachment of the support (5) to the intermediate reinforcement (2) is realised by a calage mastic bead (7).

6. Side door according to one of the previous claims, in which the gate comprises an outer panel (4) crimped to the door box (101), the said outer panel (4) comprising an inner side conveys fixing means, the outer opening order support (5) comprising fixing interfaces intended to cooperate with the fixing means fixed to the outer panel (4).

7. Side door according to one of the previous claims, in which the order outer opening plate (52) comprises pre-holding clips, the support (5) comprising interfaces intended to cooperate with said clips so as to hold the order outer opening plate (52) before it is fixed to the support (5), preferably the plate (52) is fixed to the support (5) by screws.

8. Process for producing a side door (100) according to Claim 7 and one of Claims 3 to 5 comprising the following successive steps:
- E1: Assembly during the welding shop tasks of the gate box (101) and of the frieze reinforcements (1) and intermediate reinforcements (2),
- E2: Depositing calage mastic beads (6, 7) respectively on the flat walls of the frieze reinforcement (1) and of the intermediate reinforcement (2), intended to face the flat portions of the support (5),
- E3: Attaching the support (5) to the outer gate sign (4),
- E4: Assembly of the outer gate panel (4) to the door box (101) by crimping, the flat portions of the support coming into contact against the calage mastic beads (6, 7),
- E5: Passage of the gate in a cataphoresis bath so as to protect the gate against corrosion, preferably follow-up of passage in a cooking oven,
- E6: Pre-holding the plate (52) on the support (5) by engaging the pre-holding clips in the interfaces of the support (5) follow-up of the attachment of the plate (52) to the support (5) preferably by screwing.

9. Vehicle comprising a side door (100) according to one of Claims 1 to 7.
